# DEMANDE DE BREVET EUROPEEN

(11) **EP 0 921 042 A2**
(43) Date de publication de la demande: **09.06.1999**
(21) Numéro de dépôt: 98402885.2
(22) Date de dépôt: 20.11.1998
(51) Int. Cl.: B60R 21/02

(54) **Dispositif de retenue d'une charge dans le coffre d'un véhicule**

(30) Priorité: 25.11.1997 FR 9714780
(71) Demandeur: RENAULT, 92109 Boulogne-Billancourt (FR)
(72) Inventeur: Dies, Stéphane, 75014 Paris (FR); Girard, Philippe, 95240 Cormeilles en Paris (FR)

(57) **Abrégé**

Dispositif de retenue d'une charge disposée sur le plancher du coffre arrière d'un véhicule automobile, comprenant une traverse rapportée (1) disposée dans la zone avant du coffre, en arrière du dossier (3) du siège adjacent, et déformable dans la direction de l'effort vers l'avant susceptible d'être provoqué par la charge et des moyens (10) pour fixer les parties d'extrémité de cette traverse au plancher (2) dudit coffre et présentant un axe vertical de rotation permettant la déformation vers l'avant de ladit traverse entre ces moyens de fixation, ladite traverse comprenant avantageusement une barre transversale (6) fixée par des vis (10) au plancher (2) du coffre et un carenage transversal (12) rapporté sur cette barre.

## Description

La présente invention concerne un dispositif de retenue d'une charge disposée sur le plancher du coffre arrière d'un véhicule automobile.

Lorsqu'un véhicule automobile est amené à réduire brusquement sa vitesse ou en cas de choc frontal, la charge disposée dans le coffre arrière de ce véhicule, généralement composée de bagages, sollicite vers l'avant le dossier du siège arrière de l'habitacle et le déforme constituant ainsi une gêne pour les passagers. Dans des cas extrèmes, les efforts provoqués par la charge peuvent provoquer une rupture des fixations du siège arrière telle que la charge pénètre dangereusement à l'intérieur de l'habitacle du véhicule.

Dans certains véhicules connus, le plancher du coffre présente une marche qui constitue une partie de renforcement de la caisse du véhicule et qui, accessoirement, constitue une butée rigide stoppant les bagages. Cependant, la charge peut passer au-dessus de cette marche rigide en particulier en basculant vers l'avant.

Le dispositif de retenue selon l'invention comprend une traverse rapportée disposée dans la zone avant du coffre, en arrière du dossier du siège adjacent, et déformable dans la direction de l'effort vers l'avant susceptible d'être provoque par la charge et des moyens pour fixer les parties d'extrémité de cette traverse au plancher dudit coffre et présentant un axe vertical de rotation permettant la déformation vers l'avant de ladit traverse entre ces moyens de fixation.

Ainsi, le dispositif de retenue selon la présente invention permet d'absorber au moins en partie l'énergie créée par la charge et peut jouer un rôle de répartition des efforts sur tout le bas du dossier du siège, en prenant appui sur ce dernier, limitant ainsi l'effort que la charge est susceptible d'appliquer au dossier du siège.

Selon l'invention, ladite traverse comprend de préférence une barre transversale fixée par lesdits moyens de fixation et un carenage transversal rapporté sur cette barre.

Selon l'invention, ladite barre est de préférence coudée entre lesdits moyens de fixation de manière à s'étendre à distance au-dessus du plancher dudit coffre sur au moins une partie de sa longueur.

Selon l'invention, ledit carenage se présente de préférence sous la forme d'une auge inversée de section en forme de U ou de V inversés, dans laquelle ladite barre s'étend.

Selon l'invention, ledit carenage peut avantageusement comprendre des nervures intérieures de renforcement qui s'étendent perpendiculairement à sa longueur et contre lesquelles ladite barre vient en appui.

Selon l'invention, ledit carenage comprend de préférence des moyens pour sa fixation sur ladite barre.

Selon l'invention, ledit carenage peut avantageusement comprendre des parties intérieures en saillie déformables permettant sa fixation sur ladite barre par encliquetage de haut en bas.

Selon l'invention, lesdites parties intérieures en saillie peuvent avantageusement comprendre des nervures intérieures de renforcement qui s'étendent perpendiculairement à la longueur dudit carenage.

Selon l'invention, ledit carenage s'étend de préférence jusqu'au plancher du coffre.

La présente invention sera mieux comprise à l'étude d'un dispositif de retenue d'une charge disposée sur le plancher du coffre arrière d'un véhicule automobile décrit à titre d'exemple non limitatif et illustré par le dessin sur lequel :

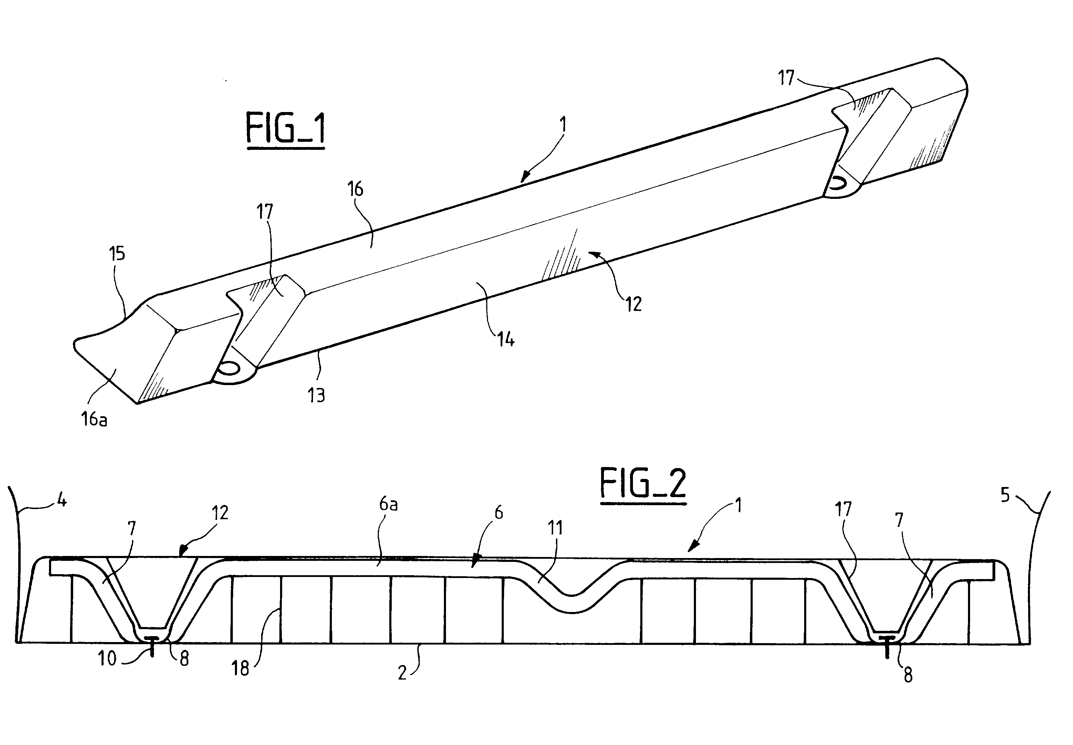

- la figure 1 représente une vue extérieure en perspective d'un dispositif de retenue selon la présente invention ;
- la figure 2 représente une coupe verticale du dispositif de retenue précité, transversalement au véhicule ;

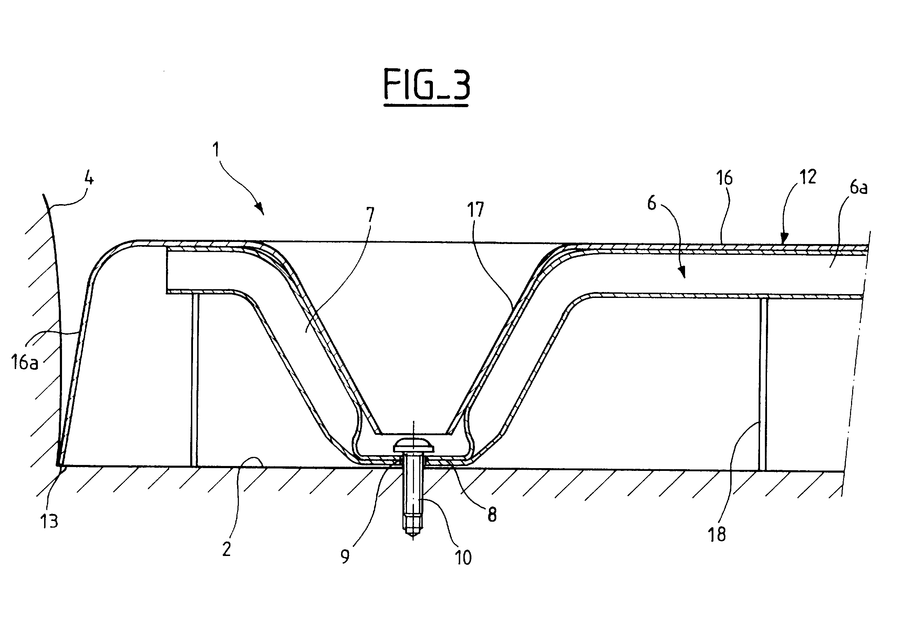

- la figure 3 représente une vue agrandie d'une partie d'extrémité du dispositif de retenue précité, selon une coupe verticale, transversalement au véhicule ;

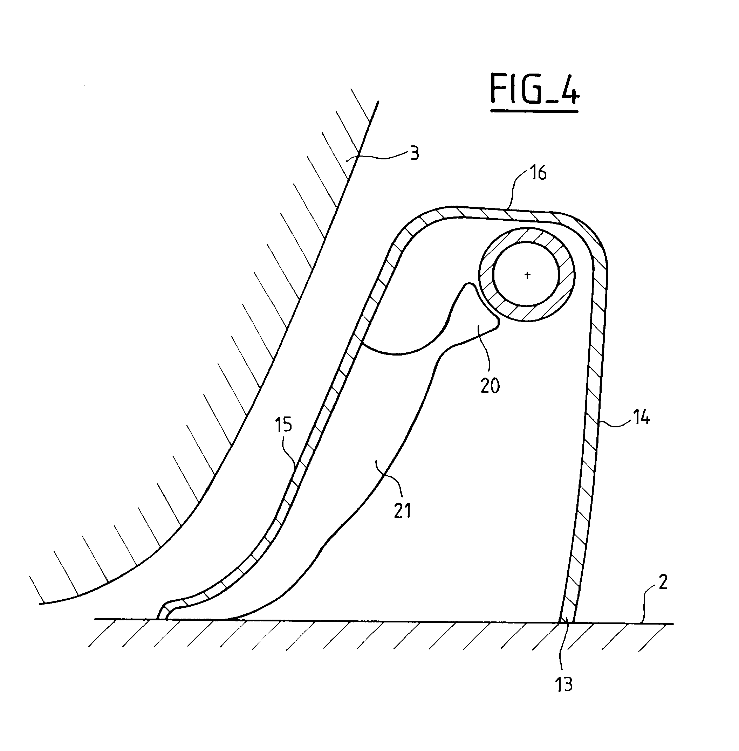

- la figure 4 représente une coupe transversale du dispositif de retenue précité en un endroit de sa longueur ;

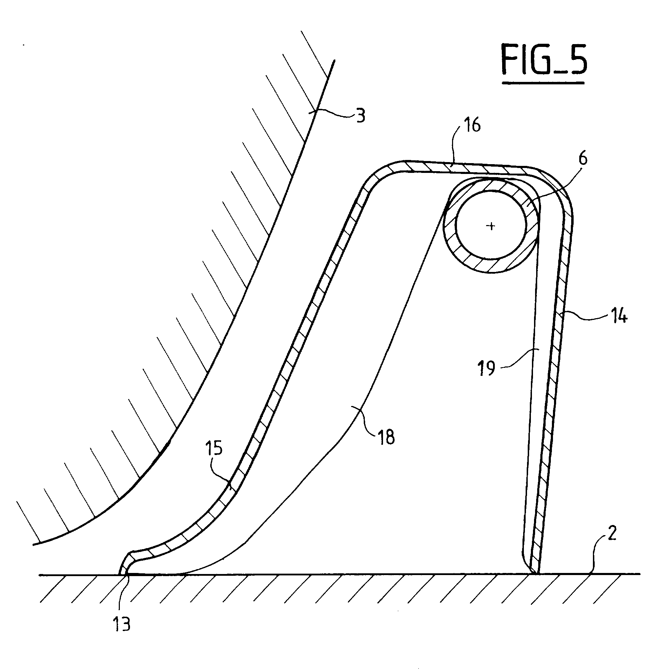

- et la figure 5 représente une coupe transversale du dispositif précité, en un autre endroit de sa longueur.

Le dispositif de retenue représenté sur les figures comprend une traverse 1 qui s'étend transversalement au véhicule et qui est rapportée sur le plancher 2 du coffre arrière d'un véhicule automobile, dans la zone avant du coffre et juste en arrière du dossier 3 généralement du siège arrière du véhicule. Cette traverse 1 s'étend jusqu'à proximité des flancs latéraux 4 et 5 du coffre.

La traverse 1 comprend une barre transversale 6, constituée par un tube cylindrique résistant, qui s'étend parallèlement et à distance du plancher 2 et qui présente, au voisinage de ses extrémités, des parties coudées vers le bas 7 en U dont les bases 8 sont aplaties et en appui sur le plancher 2.

Les bases 8 de la barre 6 présentent des orifices traversants 9 au travers desquels s'étendent avec jeu des vis de fixation 10 de cette barre en prise dans le plancher 2 du coffre.

En outre, sensiblement en son milieu, la barre 6 présente une partie coudée vers le bas 11 en V.

La traverse 1 comprend en outre un carénage 12 qui s'étend transversalement au véhicule et qui se présente sous la forme d'une auge inversée de section transversale en forme de U. Ce carénage 12 enveloppe le tube 6, son bord 13 venant en appui sur le plancher 2 du coffre.

Ce carénage 1 comprend une paroi arrière verticale 14, une paroi avant 15 légèrement ouverte vers l'avant de manière à suivre sensiblement la forme du dossier 3, une paroi horizontale supérieure l6 et des parois d'extrémité 16a qui s'étendent à faibles distances des flancs 4 et 5 du coffre. La paroi arrière 14 et la paroi avant 15 sont situées à distance de la barre 6, respectivement en arrière et en avant de cette dernière, tandis que la paroi 16 est située juste au dessus des parties hautes courantes de la barre 6.

Le carénage 12 comprend en outre des renfoncements 17 qui épousent à distance les parties coudées 7 de la barre 11, dans le sens longitudinal de cette dernière, créant ainsi un espace libre au-dessus de la partie centrale des bases 8 de cette barre traversées par les vis 10.

En vue de son renforcement, le carénage 12 présente des nervures intérieures avant 18 qui s'étendent à partir de sa paroi 17 et des nervures intérieures arrière 19 qui s'étendent à partir de sa paroi 14. Ces nervures intérieures 18 et 19 sont régulièrement réparties sur la longueur de la traverse 1 et prennent entre elles, en avant et en arrière, les parties hautes courantes 6a de la barre 6.

Le carénage 12 comprend en outre des parties intérieures en saillie 20, par exemple au nombre de deux ou de trois, régulièrement réparties sur la longueur de la barre 6, qui sont déformables élastiquement de manière à entrer en prise par encliquetage avec les parties hautes courantes 6a de la barre 6, lorsque le carénage 12 est engagé de haut en bas autour de la barre 6, fixant ainsi le carénage 12 à la barre 6.

Les parties en saillie 20 sont formées dans le prolongement de nervures 21 s'étendant à partir de la paroi avant 15 du carénage 12.

Le carénage 12 qui naturellement a une fonction esthétique contribue à constituer avec le barre 6 une traverse 1 renforcée déformable horizontalement entre les vis de fixation 10.

Lorsqu'une charge déposée sur le plancher 2 du coffre du véhicule sollicite vers l'avant la traverse 1 notamment dans sa zone s'étendant entre les deux vis de fixation 10, cette traverse 1 peut se déformer vers l'avant en prenant sensiblement la forme d'un arc. Cette déformation est rendue possible par le fait que la barre 6 peut pivoter autour des vis 10 et par le fait qu'elle peut s'allonger grâce à ses parties coudées 7 et 11 qui peuvent s'ouvrir.

La traverse 1 ayant absorbée au moins en partie l'énergie provoquée vers l'avant par la charge et s'étant déformée vers l'avant, si la paroi avant 15 du carénage 12 vient en appui contre la face arrière du dossier 3 du siège de l'habitacle du véhicule, la traverse 1 permet de répartir l'effort dû à la charge contre le dossier 3.

## Revendications

1. Dispositif de retenue d'une charge disposée sur le plancher du coffre arrière d'un véhicule automobile, caractérisé par le fait qu'il comprend une traverse rapportée (1) disposée dans la zone avant du coffre, en arrière du dossier (3) du siège adjacent, et déformable dans la direction de l'effort vers l'avant susceptible d'être provoqué par la charge et des moyens (10) pour fixer les parties d'extrémité de cette traverse au plancher (2) dudit coffre et présentant un axe vertical de rotation permettant la déformation vers l'avant de ladit traverse entre ces moyens de fixation.

2. Dispositif selon la revendication 1, caractérisé par le fait que ladite traverse comprend une barre transversale (6) fixée par lesdits moyens de fixation et un carenage transversal (12) rapporté sur cette barre.

3. Dispositif selon la revendication 2, caractérisé par le fait que ladite barre (6) est coudée entre lesdits moyens de fixation (10) de manière à s'étendre à distance au-dessus du plancher (2) dudit coffre sur au moins une partie de sa longueur.

4. Dispositif selon l'une quelconque des revendications 2 et 3, caractérisé par le fait que ledit carenage (12) se présente sous la forme d'une auge inversée de section en forme de U ou de V inversés, dans laquelle ladite barre (6) s'étend.

5. Dispositif selon l'une quelconque des revendications 2 à 4, caractérisé par le fait que ledit carenage (12) comprend des nervures intérieures de renforcement (18) qui s'étendent perpendiculairement à sa longueur et contre lesquelles ladite barre (6) vient en appui.

6. Dispositif selon l'une quelconque des revendications 2 à 5, caractérisé par le fait que ledit carenage (12) comprend des moyens (20) pour sa fixation sur ladite barre (6).

7. Dispositif selon la revendication 6, caractérisé par le fait que ledit carenage (12) comprend des parties intérieures en saillie déformables (20) permettant sa fixation sur ladite barre par encliquetage de haut en bas.

8. Dispositif selon la revendication 7, caractérisé par le fait que lesdites parties intérieures en saillie (20) comprennent des nervures intérieures de renforcement (21) qui s'étendent perpendiculairement à la longueur dudit carenage.

9. Dispositif selon l'une quelconque des revendications 2 à 8, caractérisé par le fait que ledit carenage (12) s'étend jusqu'au plancher du coffre.
